# EUROPÄISCHE PATENTSCHRIFT

(11) **EP 1 717 372 B1**
(45) Veröffentlichungstag und Bekanntmachung des Hinweises auf die Patenterteilung: **17.09.2008**
(21) Anmeldenummer: 05009105.7
(22) Anmeldetag: 26.04.2005
(51) Int. Cl.: E01H 5/02

(54) **Schneeschieber mit selbstschärfendem Schaufelblatt und Herstellungsverfahren hierfür**
Snow shovel with self sharpening shovel blade, and process for its manufacture
Pelle à neige avec lame auto effilante, et son procédé de fabrication

(43) Veröffentlichungstag der Anmeldung: 02.11.2006
(73) Patentinhaber: 3D-Technik Zehmeister GmbH, 90574 Rosstal-Neuses (DE)
(72) Erfinder: Zehmeister, Johann, 90574 Rosstal-Neuses (DE)
(74) Vertreter: Dreykorn-Lindner, Werner

(56) Entgegenhaltungen:
- DE-U1- 20 215 093
- DE-U1- 29 700 284
- US-A- 4 248 466
- US-A- 4 280 727
- US-A- 6 003 915

## Beschreibung

Die Erfindung betrifft einen Schneeschieber mit selbstschärfendem Schaufelblatt gemäß Patentanspruch 1. Weiterhin betrifft die Erfindung gemäß Patentanspruch 8 ein Herstellungsverfahren hierfür.

Schneeschieber bzw. Schneeschaufeln bzw. Schneescharren mit einem Blatt aus Holz oder Aluminium, an welchem ein Stiel befestigt ist, sind seit langem bekannt. Um zu vermeiden, dass Schneeschieber, Schneeschaufel, Schneescharre oder Eisstößer bei fast jeder Unebenheit im Pflaster oder im Bürgersteig stecken bleiben, wodurch das Schaufeln und Schieben erschwert werden, ist aus der DE 35 00 249 A1 ein Schneeschieber mit Gleit-Zinken und Eiskratzern bekannt. Im Einzelnen ist auf der Rückseite des Schneeschieberblattes hinter dessen Kante eine Stahlplatte angebracht, auf deren Unterseite sich halbkreisförmige Scheiben und heugabelähnliche, um die Kante gebogene Gleitzinken befinden. Infolge der Gleitzinken gleitet der Schneeschieber über Unebenheiten des Pflasters hinweg und die Halbscheiben bewirken ein Aufkratzen von Eis und hart getretenem Schnee auf dem Pflaster. Wenn die Gleitlinken nicht flach, sondern rund sind, sind sie in der Kante bis zu 90% eingebettet bzw. aufnehmbar. In weiterer Ausgestaltung kann die in verschiedenen Größen hergestellte Platte, samt den Gleit-Zinken und den Eiskratzern, auf herkömmlichen Schneeschiebern, Schneeschaufeln, Schneescharren oder Eisstößern angenietet, angeschraubt oder angeschweißt werden.

Um ergänzend das Klappern beim Schneeräumen zu vermeiden, ist es in Weiterentwicklung hierzu aus der DE 35 03 250 A1 bekannt, zwischen dem Blatt und der Stahlkante des Schneeschiebers eine Kunststoffschicht anzuordnen, die als Schalldämpfer funktioniert. Anstelle der Gleitzinken sind dabei bogen- bis halbkreisförmige Scheiben oder Pflüge vorgesehen und die Stahlkante wird zum Blatt mit Nieten befestigt. Die Scheiben oder Pflüge sind ebenso wie die Gleitzinken parallel oder schräg zur Schiebrichtung angeordnet. Um den festgetretenen Schnee aufzuschneiden, wird der Stiel des Schneeräumers niedriger als sonst gehalten, so dass die Scheiben den Schnee bis zum Grund aufschneiden.

Weiterhin ist - zur einfachen und kraftschonenden Befreiung von schneebedeckten Oberflächen ohne Ankanten und Anstoßen an unebenen Stellen - aus dem DE 297 00 284 U1 ein Schneeschieber bekannt, welcher darüber hinaus auf empfindlichen Oberflächen einsetzbar ist. Hierzu ist auf der Unterkante des Schneesbleches eine Gummileiste befestigt, die ein Gleiten über die vom Schnee zu befreiende Oberfläche ermöglicht. Im Einzelnen besitzt die Gummileiste eine Eisenschiene zur aufsteckbaren Befestigung am Schneeblech, sowie eine Kunststoffummantelung als Befestigungsmaterial für die Hartgummitülle mit Luftkern. Gleichzeitig dient die Kunststoffummantelung zum Schutz der Eisenschiene vor Umwelteinflüssen und um mehr Stabilität herzustellen.

Weiterhin ist aus dem DE 296 20 444 U1 ein Schneeschieber aus Holz oder Aluminium kombiniert mit einem Federstahlunterteil bekannt, welches ca. 1-2 mm dick, ca. 10 cm hoch und genauso breit wie der Schneeschieber ist, wobei der Stiel genau in der Mitte des Federstahlunterteils ansetzt. Damit kann in einem Arbeitsgang Schnee und Eis in ausreichender Breite gelöst und die so gelösten Schichten auf dem Schneeschieber aufgenommen und zur Seite geschoben werden. Ein Hinweis, wie Schneeschieber und Federstahlunterteil miteinander verbunden werden, ist dem DE 296 20 444 U1 nicht zu entnehmen. Bei längerem Gebrauch ist ein Ausbrechen des Holzschiebers, welcher in der Regel aus 6 mm dicken schichtverleimten Holz besteht, an der Kante zu beobachten. Weiterhin bricht sich der Schnee an der Kante, was ein Hineingleiten des Schnees in den Schneeschieber verhindert und beispielsweise das Räumen von Pulverschnee erschwert. Bei einem Schneeschieber aus Aluminium sind aus Gründen der Stabilität Rillen in die Aluminiumschaufel eingeprägt, was eine flächige Verbindung (wie bei einem Schneeschieber aus Holz) zwischen Schneeschieber und Federstahlunterteil erschwert. Bei häufigem Gebrauch drückt sich Eis in die sich gegenüberstehenden Kanten von Schaufel und Federstahlunterteil ein und der bekannte Effekt des Umbördelns der Aluminiumschaufel ist zu beobachten. Schließlich erhöht das Federstahlunterteil das Gewicht der Kombination im Vergleich zu einem handelüblichen Schneeschieber beträchtlich.

Schließlich ist aus dem DE 202 15 093 U1 ein per Hand führbaren Schneeschieber, bestehend aus einem Griffstiel mit daran befestigter, in Gebrauchsstellung zum Boden hin flach gebogener Schaufel aus Metall, Kunststoff oder Holz sowie einer auf die freie Kante der Schaufel aufgesetzten, verstärkenden Leiste bekannt. Um zu vermeiden, dass die Schaufel an der Pflasterung hängen bleibt und dass darüber hinaus der Schneeschieber auch bei der Beseitigung von Schlamm z. B. aus überfluteten, gefliesten Kellerräumen eingesetzt werden kann, besteht die Leiste aus flexiblem, elastischem und verschließfestem Kunststoff und weist an ihrem freien Ende eine Abschrägung auf, wobei die untere Spitze der Abschrägung in Gebrauchsrichtung vorragt. Als Kunststoff für die Leiste des Schneeschiebers wird ein Elastomer gewählt, insbesondere Polyurethan. Dieses Material gewährleistet die Verschleißfestigkeit seiner Kantenleiste bei gleichzeitiger notwendigen Härte und Flexibilität. Die Leiste ist im Querschnitt im wesentlichen trapezförmig ausgebildet und weist an ihrem Befestigungsende eine Nut zur Aufnahme der Schaufelkante auf. Ferner ist die Leiste mit der in die Nut eingesteckten Schaufelkante mittels geeigneter Befestigungsmittel kraftschlüssig verbunden, beispielsweise Schrauben oder Nieten, welche vertieft im Kunststoffmaterial der Leiste angeordnet sind. Die Leiste weist eine in vertikaler Richtung gemessene Dicke von ca. 8 mm auf und die Materialstärke der Schaufel ist ca. 2 mm.

Weiterhin ist aus der US-A- 4 280 727 ein Schneeschieber mit einem Schaufelblatt aus Kunststoff bekannt, welches in Schieberichtung verlaufende Versteifungen oder Ausprägungen aufweist. Im Bereich der Räumkante des Schaufelblatts ist ein Körper angeordnet, welcher mit dem Schaufelblatt durch partielles Umspritzen fest verbunden ist. Der Körper ist dabei als schmaler, sich über die Räumkante nach vorne erstreckender Metallstreifen ausgestaltet, welcher auf der gegenüberliegenden Seite vom Kunststoffmaterial des Schaufelblatt gabelförmig umgriffen wird. Das Schaufelblatt mit dem partiell umspritzten Metallstreifen ist in einem Spritzvorgang herstellbar und weist für den Zusammenbau entsprechend ausgestaltete Aufnahmen für den Schaufelstiel auf.

Schließlich ist aus der US-A- 4 248 466 ein Schneeschieber mit einem Schaufelblatt aus Kunststoff bekannt, welches in Schieberichtung verlaufende Versteifungen oder Ausprägungen aufweist. Im Bereich der Räumkante des Schaufelblatts ist an dem unteren Teil der Schaufel ein Körper derart befestigt, dass er die Plastikschaufel gegen Verschleiß schützt. Der Körper ist dabei als schmaler Metallstreifen ausgestaltet, welcher im mittleren Bereich eine Ausprägung bzw. Aussparungen aufweist. In diesem Bereich wird der Körper beim Spritzvorgang partiell umspritzt, so dass die angrenzenden, frei bleibenden Seitenflächen des Metallstreifens die Unterseite der Plastikschaufel schützen.

Wie die vorstehende Würdigung des Standes der Technik aufzeigt, sind unterschiedlich ausgestaltete Schneeschieber mit einem an der Schaufelkante befestigbaren Teil bekannt. Nachteilig bei diesen bekannten Schneeschiebern ist, dass die Montage der separaten Teile aufwendig ist (DE 202 15 093 U1) Weiterhin ist von Nachteil, dass die befestigbaren Teile das Gesamtgewicht erhöhen. Die Räumleistung ist häufig nicht befriedigend, da konstruktionsbedingt ein Teil des Schnees liegen bleibt (DE 35 00 249 A1, DE 35 03 250 A1) oder es ist durch die stumpfe Kante ein hoher Kraftaufwand erforderlich (DE 297 00 284 U1) oder bei längerem Gebrauch ist ein Aussplittern der Holzschaufel oder Umbördeln der Aluminiumschaufel sowie ein Lösen der Verbindung zwischen Schaufel und kombiniertem Teil zu beobachten (DE 296 20 444 U1). Deshalb fehlt in der Praxis ein kostengünstiger Schneeschieber, welcher eine hohe Lebensdauer aufweist. Besonders bedeutsam ist dies, weil die Holz bzw. Metall bearbeitende Industrie als äußerst fortschrittliche, entwicklungsfreudige Industrie anzusehen ist, die schnell Verbesserungen und Vereinfachungen aufgreift und in die Tat umsetzt.

Der Erfindung liegt die Aufgabe zugrunde, einen Schneeschieber derart auszugestalten, dass dieser eine lange Lebensdauer aufweist und kostengünstig fertigbar ist.

Diese Aufgabe wird, ausgehend von einem Schneeschieber gemäß Oberbegriff des Patentanspruchs 1, dadurch gelöst, dass der Körper durch vollständiges Umspritzen mit dem Schaufelblatt fest verbunden ist, so dass der Körper beim Gebrauch des Schneeschiebers teilweise freigeschliffen wird.

Der erfindungsgemäße Schneeschieber weist die Vorteile auf, dass der Körper in das Schaufelblatt aus Kunststoff eingespritzt ist, somit sich nicht lösen bzw. verloren gehen kann und dem Schaufelblatt zusätzliche Stabilität verleiht. Weiterhin wird beim Gebrauch des Schneeschiebers der Körper immer nachgeschliffen so dass sich insgesamt das Schaufelblatt bzw. der Körper in Räumrichtung winkelmäßig der Handhabung seitens der Bedienperson anpasst. Da sich die Schnittkante durch einen den Körper umhüllenden Kunststoff nicht umbördeln kann, und da der Körper gegen Umwelteinflüsse (z.B. Feuchtigkeit und somit Rost) geschützt ist, weist der erfindungsgemäße Schneeschieber eine lange Lebensdauer auf. Zur Anpassung an die Leistungsfähigkeit der Bedienperson kann zudem der Schneeschieber in verschiedenen Breiten, beispielsweise 350mm oder 500mm ausgeführt werden. Insgesamt wird beim erfindungsgemäßen Schneeschieber eine hohe mechanische Belastbarkeit erreicht, wobei durch Dimensionierung von Schaufelblatt und eingespritzten Körper auch sehr hohe Anforderungen an Stabilität und Robustheit erfüllt werden können.

Weiterhin wird diese Aufgabe bei einem Verfahren zur Herstellung des Schneeschiebers nach Patentanspruch 8 gelöst, wobei der Schneeschieber ein Schaufelblatt aus Kunststoff und einen im Bereich der Räumkante des Schaufelblatts angeordneten Körper aufweist, bei dem
a) der Körper zwischen zwei Halbschalen eines Werkzeugs eingelegt und mittig angeordnet wird,
b) der Körper positioniert wird und
c) schließlich der Kunststoff eingespritzt wird, wobei als Distanzhalter für den Körper Noppen oder Stempel am Werkzeug dienen und wobei zur Positionierung zueinander korrespondierende Mittel am Werkzeug und am Körper vorgesehen sind.

Das erfindungsgemäße Verfahren weist den Vorteil auf, dass auf überraschend einfache und kostengünstige Art und Weise der Schneeschieber mit wenigen Arbeitsschritten automatisch herstellbar ist und beim Zusammenbau keinen komplizierten Montagevorgang erfordert. Weiterhin sind keine Präzisionsteile, z.B. Frästeile, als Körper notwendig, da Toleranzschwankungen des Körpers direkt in die Wanddicke des Schaufelblatts eingehen (infolge der Noppen oder Stempel am Werkzeug) und dadurch kompensiert werden.

Dies gilt auch für die Ausgestaltung des Verfahrens nach Patentanspruch 9.

Vorzugsweise werden, gemäß Patentanspruch 10, die Positioniermittel im Körper durch Stanzen und Erhebungen am Körper durch Freistanzen und anschließendem Biegevorgang hergestellt.

In Weiterbildung der Erfindung ist, gemäß Patentanspruch 2, der Körper als Platte mit Ausnehmungen und/oder senkrechten Erhebungen ausgestaltet, die Platte liegt im umhüllenden Kunststoff des Schaufelblatts mittig und besteht aus einem Blech, insbesondere Aluminium oder Messing, oder Stahl.

Diese Weiterbildung der Erfindung weist den Vorteil auf, dass mit einem handelsüblichen Spritzautomat eine einfache Positionierung der Platte beim Spritzvorgang sowie durch die innige und gleichmäßige Umschließung der Platte durch das Kunststoffmaterial eine zuverlässige Lagerung ermöglicht wird; zudem wird ein Rosten des eingelagerten Körpers zuverlässig vermieden (guter Schutz gegen Feuchtigkeit und Umwelteinflüsse). Dadurch wird eine kompakte und robuste Bauweise ermöglicht, woraus eine höhere Lebensdauer resultiert, was erwünscht und von Bedeutung ist.

Vorzugsweise weist, gemäß Patentanspruch 3, das Schaufelblatt auf der Schneeaufnahmeseite mindestens eine quer zur Schieberichtung verlaufende Erhöhung auf.

Dadurch wird verhindert, dass der Schnee, insbesondere Pulverschnee, vom Schaufelblatt herunterrutscht und dass die Stabilität des erfindungsgemäßen Schneeschiebers weiter erhöht wird.

In Weiterbildung der Erfindung weist, gemäß Patentanspruch 4, das Schaufelblatt auf drei Seiten hochgezogene Ränder und mindestens eine Aussparung oder eine Aufnahme zur kraft- oder formschlüssigen Befestigung des Stiels auf.

Diese Weiterbildung der Erfindung weist den Vorteil auf, dass einerseits das Fassungsvermögen des Schaufelblatts erhöht wird und dass andererseits eine einfache Befestigung des Stiels und kurzer Übergang der am Stiel ausgeübten Kraft in das Schaufelblatt ermöglicht wird.

Weitere Vorteile und Einzelheiten lassen sich der nachfolgenden Beschreibung einer bevorzugten Ausführungsform der Erfindung unter Bezugnahme auf die Zeichnung entnehmen. In der Zeichnung zeigt:
- FIG. 1: den erfindungsgemäßen Schneeschieber in Draufsicht, Seitenansicht und im Schnitt,
- FIG. 2: in perspektivischer Darstellung die Rückansicht und
- FIG. 3: eine Seitenansicht des erfindungsgemäßen Schneeschiebers und
- FIG. 4: in perspektivischer Darstellung den Körper als Platte.

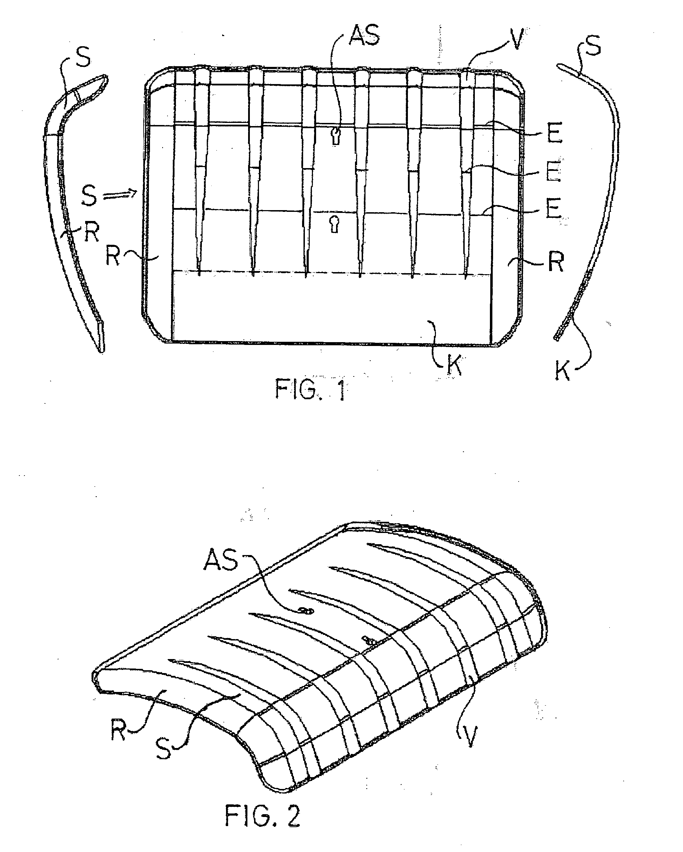

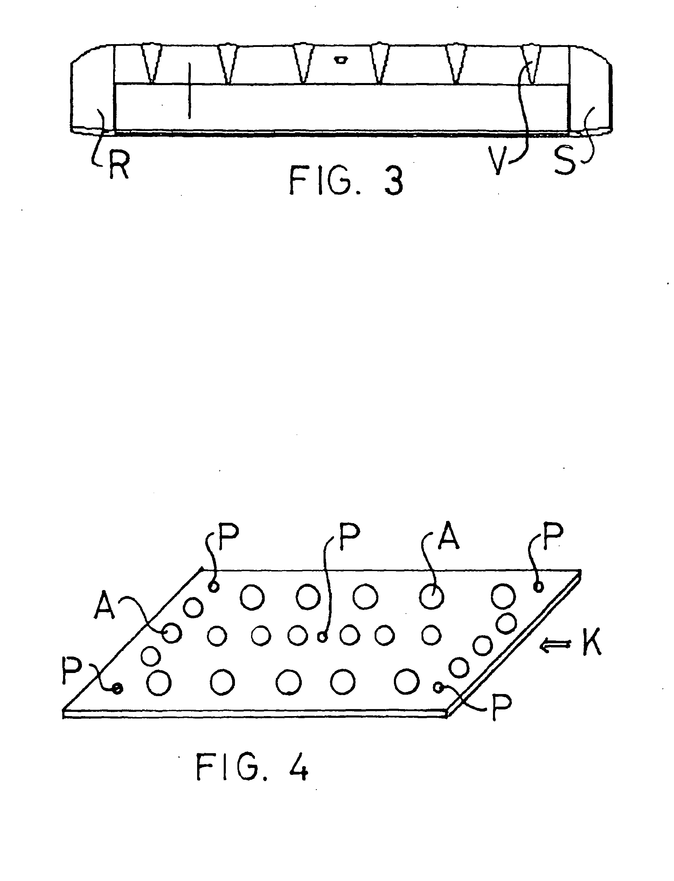

Der in FIG. 1 bis FIG. 4 dargestellte erfindungsgemäße Schneeschieber weist ein Schaufelblatt S aus Kunststoff, mit in Schieberichtung verlaufende Versteifungen oder Ausprägungen V und einen im Bereich der Räumkante des Schaufelblatts S angeordneten Körper K auf, welcher mit dem Schaufelblatt S durch vollständiges Umspritzen fest verbunden ist. Als Kunststoffmaterial eignet sich besonders ABS (Acrylbutatinstyrol, Polyamid). Vorzugsweise ist der Körper K als Platte mit Ausnehmungen A, beispielsweise Bohrungen, ausgestaltet, wobei diese durchgespritzten Ausnehmungen A vorzugsweise einen Durchmesser im Bereich von 6 mm bis 8 mm aufweisen. Weiterhin sind Positionierstellen P (zur Positionierung des Körpers K beim Spritzprozess), insbesondere Bohrungen vorgesehen, welche vorzugsweise einen Durchmesser im Bereich von 4 mm bis 6 mm aufweisen (siehe FIG. 4 mit fünf verteilt angeordneten Positionierbohrungen P). Alternativ oder zusätzlich kann die Platte K senkrechten Erhebungen aufweisen oder es kann ein profilierter Körper benutzt werden (in der Zeichnung nicht dargestellt). Die Platte K liegt mittig im umhüllenden Kunststoff des Schaufelblatts S (infolge der Noppen/Stempel an den Werkzeug-Halbschalen) und besteht aus einem Blech, insbesondere Aluminium oder Messing oder Stahl. Die Dicke des Schaufelblatts S liegt vorzugsweise im Bereich von 4 mm bis 6 mm und die der Platte K im Bereich zwischen 1 mm und 2 mm, so dass insgesamt das Gewicht des erfindungsgemäßen Schneeschiebers unter dem eines handelsüblichen Schneeschiebers aus Aluminium liegt.

Am Schaufelblatt S sind seitlich Anrundungen R vorgesehen, welche verhindern, dass der Schnee seitlich herunter fällt; weiterhin sind auf der Schneeaufnahmeseite mehrere quer zur Schieberichtung verlaufende Erhöhung E angeordnet, welche verhindern, dass der im Schaufelblatt S aufgenommene Schnee wieder herunterrutscht.

Vorzugsweise weist das Schaufelblatt S zwei Aussparungen AS zur kraft- oder formschlüssigen Befestigung des Stiels auf (siehe FIG.1, FIG.2), beispielsweise für Schlossschrauben oder Klemmbacken. Alternativ oder zusätzlich kann der Körper K zwischen zwei Versteifungen/Ausprägungen V soweit hochgezogen werden, dass daran der Stiel kraft- oder formschlüssig befestigt werden kann oder es ist an das Schaufelblatt S eine Aufnahme zur kraft- oder formschlüssigen Befestigung für den Stiel (beispielsweise als Klemmvorrichtung, Schraubvorrichtung) angespritzt (in der Zeichnung nicht dargestellt). Der Körper K kann auch Erhebungen aufweisen, welche an den so freiliegenden Stellen als Kratz- oder Kufenmittel oder Mittel zum Aufhängen des Schneeschiebers bei Nichtgebrauch ausgestaltet sind (in der Zeichnung nicht dargestellt). Diese können ebenso wie die Aussparungen A bzw. Positionierbohrungen P durch Stanzen und danach in einem Biegevorgang fertigungstechnisch einfach hergestellt werden, insbesondere sind nur geringe Herstellungskosten und Werkzeugkosten erforderlich. Weiterhin wird auch eine schnelle und kosteneffektive Änderung des Körpers K ermöglicht. Vorzugsweise können die Kratz- oder Kufenmittel auch als Aufnahme für eine Leiste aus flexiblem, elastischem und verschleißfestem Kunststoff oder eine Gummilippe (insbesondere für Wasser schieben oder für empfindliche Oberflächen) dienen. Die Aufnahme kann beispielsweise Rastmittel für die Leiste aufweisen (was den Vorteil der einfachen Auswechselbarkeit mit sich bringt), wobei die Leiste an ihrem freien Ende eine Abschrägung aufweist und die untere Spitze/abgerundete Kante der Abschrägung in Gebrauchsrichtung über die selbstschärfende Kante des oben aufliegenden Körpers K vorragt oder diese umgreifen (Aussparung in der Leiste für das Einschieben der selbstschärfenden Kante).

In alternativer Ausgestaltung kann das Schaufelblatt S Rastmittel für die Befestigung der Leiste aufweisen, welche im Schaufelblatt S vertieft sind; beispielsweise an der Stelle der Positionierbohrungen P. Diese Ausgestaltung ermöglicht auch eine umweltgerechte Entsorgung, da sie eine einfache Materialtrennung aller Montageteile erlaubt.

Der erfindungsgemäße Schneeschieber ist konstruktiv einfach und unter Benutzung weniger Einzelteile aufgebaut, ermöglicht eine rationelle, automatische Montage/Fertigung praktisch in einem Arbeitsgang, ist kostengünstig herstellbar, außerordentlich robust und behält über seine gesamte Lebensdauer hinweg eine gleichbleibend scharfe Kante. Dies ist darauf zurück zuführen, dass beim Gebrauch des Schneeschiebers der Körper K ständig freigeschliffen wird, so dass insgesamt auf überraschend einfache Art und Weise eine selbstschärfende Kante erzeugt wird.

In Weiterbildung der Erfindung kann der Körper K aus Verbundwerkstoff bestehen, beispielsweise Kunststoff mit eingelagertem Füllstoff wie Kohlenstofffasern und/oder ein Metallgranulat; die Versteifungen oder Ausprägungen V können konkav oder konvex sein oder ein Profil aufweisen; u.a..

## Patentansprüche

1. Schneeschieber mit einem Schaufelblatt (S) aus Kunststoff, welches in Schieberichtung verlaufende Versteifungen oder Ausprägungen (V) aufweist und mit einem im Bereich der Räumkante des Schaufelblatts (S) angeordneten Körper (K), welcher mit dem Schaufelblatt (S) fest verbunden ist, **dadurch gekennzeichnet, dass** der Körper (K) mit dem Schaufelblatt (S) durch vollständiges Umspritzen fest verbunden ist, so dass der Körper (K) vom Kunststoff des Schaufelblatts (S) vollständig umhüllt ist und beim Gebrauch des Schneeschiebers teilweise freigeschliffen wird.

2. Schneeschieber nach Anspruch 1, **dadurch gekennzeichnet, dass** der Körper (K) als Platte mit Ausnehmungen (A) und/oder senkrechten Erhebungen ausgestaltet ist, dass die Platte (K) im umhüllenden Kunststoff des Schaufelblatts (S) mittig liegt und dass die Platte (K) aus einem Blech, insbesondere Aluminium oder Messing oder Stahl besteht.

3. Schneeschieber nach Anspruch 1, **dadurch gekennzeichnet, dass** das Schaufelblatt (S) auf der Schneeaufnahmeseite mindestens eine quer zur Schieberichtung verlaufende Erhöhung (E) aufweist.

4. Schneeschieber nach Anspruch 1, **dadurch gekennzeichnet, dass** das Schaufelblatt (S) auf drei Seiten hochgezogene Ränder (R) und mindestens eine Aussparung (AS) oder eine Aufnahme zur kraft- oder formschlüssigen Befestigung eines Stiels aufweist.

5. Schneeschieber nach Anspruch 1, **dadurch gekennzeichnet, dass** der Körper (K) Erhebungen aufweist, welche an den so freiliegenden Stellen als Kratz- oder Kufenmittel oder Mittel zum Aufhängen des Schneeschiebers bei Nichtgebrauch ausgestaltet sind.

6. Schneeschieber nach Anspruch 1, **dadurch gekennzeichnet, dass** das Schaufelblatt (S) Rastmittel für die Befestigung einer Leiste aus flexiblem, elastischem und verschleißfestem Kunststoff oder einer Gummilippe aufweisen.

7. Schneeschieber nach Anspruch 5, **dadurch gekennzeichnet, dass** die Erhebungen eine Aufnahme für eine Leiste aus flexiblem, elastischem und verschleißfestem Kunststoff oder eine Gummilippe aufweisen.

8. Verfahren zur Herstellung eines Schneeschiebers nach einem der Ansprüche 1 bis 7, wobei der Schneeschieber ein Schaufelblatt (S) aus Kunststoff und einen im Bereich der Räumkante des Schaufelblatts (S) angeordneten Körper (K) aufweist, **bei dem**
a) der Körper (K) zwischen zwei Halbschalen eines Werkzeugs eingelegt und mittig angeordnet wird,
b) der Körper (K) positioniert wird und
c) schließlich der Kunststoff eingespritzt wird, wobei als Distanzhalter für den Körper (K) Noppen oder Stempel am Werkzeug dienen und wobei zur Positionierung zueinander korrespondierende Mittel (P) am Werkzeug und am Körper (K) vorgesehen sind.

9. Verfahren nach Anspruch 8, **gekennzeichnet durch** die Vertauschung der Verfahrensschritte a) und b).

10. Verfahren nach Anspruch 8, **dadurch gekennzeichnet, dass** die Positioniermittel (P) im Körper (K) durch Stanzen und Erhebungen am Körper durch Freistanzen und anschließendem Biegevorgang hergestellt werden.

## Claims

1. Snow shovel comprising a shovel blade (S) made of synthetic material, which has reinforcements or stampings (V) which run in direction of said shovel and comprising a body (K) arranged in the area of depleted edge of said shovel blade (S), which is fixedly bonded with said blade (S), **characterised in that** said body (K) is fixedly bonded with said blade (S) through spray coating whereby said body (K) is covered by said synthetic material of said shovel blade (S) and whereby said body (K) is clearing-ground and partly sharpened with the use of said snow shovel.

2. Shovel according to claim 1, **characterised in that** said body (K) is formed like a plate (K) with recesses (A) and/or vertical projections, whereas said plate (K) lies in the central of the covering synthetic material of said shovel blade (S) and whereas said plate (K) is made of metal, in particular of aluminium or a brass or a steel.

3. Shovel according to claim 1, **characterised in that** said shovel blade (S) has on the side where the snow is gathered at least an increase (E), which is diagonal to the sliding direction of the pusher.

4. Shovel according to claim 1, **characterised in that** said shovel blade (S) has on its three sides pulled up edges (R) and at least a recess (AS) or a receptacle to strength or positive attachment of the stem.

5. Shovel according to claim 1, **characterised in that** said body (K) has projections, which are designed at the free lying places as scratching or skid means or as means for hanging up the snow shovel with nonusage.

6. Shovel according to claim 1, **characterised in that** said shovel blade (S) has latch means for attaching a ledge made of flexible and elastic synthetic material or for attaching a rubber lip.

7. Shovel according to claim 5, **characterised in that** said projections have a receptacle for a ledge made of flexible and elastic synthetic material or for a rubber lip.

8. Method of manufacturing a snow shovel in accordance with patent claims from 1 to 7, whereas the snow shovel consists of a shovel blade (S) made of synthetic material and comprising a body (K) arranged in the area of depleted edge of said shovel blade (S), **whereas**
a) first said body (K) is positioned between two half shells of a tool and central arranged,
b) next said body (K) is positioned and
c) finally said synthetic material is injected whereas knobs or stamps serve as distance holder for said body (K) and whereas for the positioning corresponding means (P) to each other at said tool and at said body (K) are provided.

9. Method according to claim 8, **characterized by** the permutation of the method steps A) and b).

10. Method according to claim 8, **characterised in that** said recesses (P) for the spacers and/or positioning means in said body (K) are manufactured by punches and projections at said body (K) are manufactured by free-dances and subsequent bending operation.

## Revendications

1. Pelle à neige avec une plaque (S) en matière plastique, laquelle possède en direction du mouvement de la pelle à neige des renforcements ou des moulures estampées (V) et au niveau du bord à déblayer de la plaque (S) un corps (K), lequel est fixée à la plaque (S), **caractérisée en ce que** le corps (K) est coulé par injection en matière plastique et fixé à la plaque (S), d'une manière telle que le corps (K) est totalement enveloppée par la matière plastique de la plaque (S) et il est partiellement libéré par le frottement de la pelle à neige lors de son utilisation.

2. Pelle à neige selon revendication 1, **caractérisée en ce que** le corps (K) est une lame équipée des creux (A) et/ou des bosses perpendiculaires pour que la lame soit positionnée au milieu de la matière plastique qui enveloppe la plaque (S) et dont la lame (K) est en tôle, notamment de l'aluminium ou du laiton ou de l'acier.

3. Pelle à neige selon revendication 1, **caractérisée en ce que** la plaque (S) possède du côté ramassant la neige au minimum une nervure (E) étant située au travers de la direction du ramassage de neige.

4. Pelle à neige selon revendication 1, **caractérisée en ce que** la plaque (S) possède trois côtés avec des bords (R) relevés et au minimum une encoche (AS) ou un dispositif pour la fixation en forme et en force d'un manche.

5. Pelle à neige selon revendication 1, **caractérisée en ce que** le corps (K) possède des bosses qui servent aux endroits libérés de moyens à racler ou de moyens de patins ou pour suspendre la pelle à neige, si elle n'est pas utilisée.

6. Pelle à neige selon revendication 1, **caractérisée en ce que** la plaque (S) possède des moyens pour encliqueter une latte en matière plastique flexible, élastique et résistante à l'usure, ou une lèvre en caoutchouc.

7. Pelle à neige selon revendication 5, **caractérisée en ce que** les bosses possèdent un moyen pour la fixation d'une latte en matière plastique flexible, élastique et résistante à l'usure, ou une lèvre en caoutchouc.

8. Procédé de fabrication d'une pelle à neige selon une des revendications 1 jusqu'à 7, où la pelle à neige possède une plaque (S) en matière plastique et un corps (K) au niveau du bord à déblayer de la plaque (S), **caractérisé en ce que**
a) le corps (K) est positionné au milieu entre les deux parties d'un moule à injection
b) le corps (K) sera positionné et
c) enfin la matière plastique sera injectée, où des noppes ou des goujons d'assemblage servent de pièces d'écartement au niveau du moule à injection et où pour le positionnement on prévoit des moyens (P) correspondants au niveau du moule à injection et au niveau du corps (K).

9. Procédé selon revendication 8, **caractérisé en ce que** la permutabilité entre les étapes a) et b) est possible.

10. Procédé selon revendication 8, **caractérisé en ce que** les moyens de positionnement (P) du corps (K) sont réalisés par le découpage et les bosses par le découpage et le pliage suivant.
